# EUROPÄISCHE PATENTSCHRIFT

(11) **EP 0 972 959 B1**
(45) Veröffentlichungstag und Bekanntmachung des Hinweises auf die Patenterteilung: **29.12.2004**
(21) Anmeldenummer: 99810531.6
(22) Anmeldetag: 17.06.1999
(51) Int. Cl.: F16C 27/02, F16C 17/22, F16C 33/04

(54) **Flüssigkeitsgeschmiertes radiales Gleitlager**
Radial sliding bearing lubricated by a fluid
Palier radial lisse lubrifié par un fluide

(30) Priorität: 16.07.1998 EP 98810682
(43) Veröffentlichungstag der Anmeldung: 19.01.2000
(73) Patentinhaber: Sulzer Pumpen AG, 8404 Winterthur (CH)
(72) Erfinder: Leibundgut, Erwin, 8404 Winterthur (CH)
(74) Vertreter: Sulzer Management AG

(56) Entgegenhaltungen:
- EP-B- 0 204 235
- WO-A-93/22575
- DE-A- 3 613 776
- DE-A- 3 728 039
- DE-B- 1 266 570
- DE-C- 153 952

## Beschreibung

Die Erfindung handelt von einem flüssigkeitsgeschmierten radialen Gleitlager mit einer Lagerbuchse aus verschleissfestem Lagermaterial, die elastisch in einem Aussenteil befestigt ist, und die mit einem Wellenteil eine elastische Lagerung bildet, welche thermischen Wärmeausdehnungen und Wellenschrägstellungen begrenzt folgen kann, wobei das Lagermaterial in einem Lagerring befestigt ist.

In der EP-B-0 204 235 wird ein derartiges Lager mit einer Lagerbuchse aus Siliziumcarbid gezeigt, in welcher eine weitere mit der Welle drehende Wellenhülse läuft. Die Lagerbuchse ist aussen mit einem elastischen Gummischlauch überzogen, der zusätzlich in Nuten auf deren Mantelfläche eingreift und aussen mit Klebstoff in einer Gehäusebohrung im Gehäuse befestigt ist. Die Elastizität der Zwischenschicht aus Gummi soll Überbelastungen wegen Wellendurchbiegungen, Stössen oder Schiefstellungen verhindern. Wegen der Verwendung von Gummi und Kleber ist ein Einsatz für alle Arten von Wasser vorgesehen. Die Verwendung von Gummi schränkt den Einsatzbereich eines solchen Lagers ein. Lösungsmittel und Alterung können die elastischen Eigenschaften von Gummi stark verändern; Erweichen, Aushärten oder Verspröden können stattfinden.

Eine weitere Konstruktion zeigt die Firma CERATEC (Technical Ceramics BV, P.O. Box 57, 4190 CB Geldermalsen, The Netherlands) in ihrem Prospekt vom Mai 1997 für Kompaktgleitlager. Gezeigt sind keramische Gleitpaarungen, bei denen keramische Lagerbuchsen und Wellenhülsen jeweils in einem Stützring eingebettet sind. In der Mantelfläche der Stützringe sind U-förmige Schlitze angebracht und U-förmige Lappen freigeschnitten, an denen die keramischen Lagerbuchsen und Wellenhülsen aufliegen, um unterschiedliche Wärmeausdehnungen zu kompensieren. Das Freischneiden der U-förmigen Lappen muss mit funkenerosiven Drahtschneiden oder mit Elektroden von dünnem U-förmigen Querschnitt funkenerosiv erfolgen, was in beiden Fällen eine langwierige und teure Bearbeitung ist. Die Länge der funkenerosiv herzustellenden Schlitze ist wesentlich grösser als der Lagerumfang. Andere Verfahren als Funkenerosion machen die Herstellung dieser Schlitze nicht billiger. Im weiteren sind an den keramischen Lagerbuchsen und Wellenhülsen direkte Druckspitzen vorhanden, die mit drucklosen Zonen abwechseln und bei grösseren Schrägstellungen treten diagonal versetzte zusätzliche Druckpunkte an den Keramikhülsen auf.

Aufgabe der Erfindung ist es, eine elastische Lageraufhängung zu erreichen, bei der die Steifigkeit der Aufhängung vorbestimmbar ist und unverändert bleibt.

Diese Aufgabe wird mit den Kennzeichen des unabhängigen Anspruchs 1 erfüllt.

Diese Anordnung hat den Vorteil, dass eine ausreichend elastische Aufhängung mit metallischen Werkstoffen erreicht wird und, dass auch spröde Lagermaterialien wie Keramik, Hartstoffe und beispielsweise Siliziumcarbid verwendet werden können. Lager dieser Art sind bei mehrfach gelagerten Wellen wie beispielsweise bei Vertikalpumpen und ein- oder mehrstufigen Zentrifugalpumpen von Vorteil. Mit dieser Konstruktion kann sowohl bei tiefen Temperaturen als auch bei hohen Temperaturen eine elastische Lageraufhängung erreicht werden.

Vorteilhafte Weiterbildungen der Erfindung ergeben sich aus den Ansprüchen 2 bis 10. Bei einem durchgehend geschlossenen Federring können Zugspannungen zum Einspannen des Lagerrings erzeugt werden.

Die über diese Zugspannungen erzeugten Radialkräfte heben sich über den Umfang des Lagerrings auf, sodass eine kontrollierte radiale Steifigkeit des Lagers trotz grosser Kraftübertragung zwischen Federring und Lagerring entsteht. Die Anordnung und Länge der Brücken zwischen Federring und Stützring hat einen Einfluss auf die Herstellung und den Platzbedarf. Die trennenden Schlitze zwischen Federring und Stützring sollten schmal sein, um nicht zuviel Platz zu beanspruchen. Schmale Schlitze erhöhen auch die passive Sicherheit bei einem Havariefall, wenn der Federring bei übergrossen Kräften am Stützring anschlägt. Da die Länge aller Schlitze immer noch geringer als der Lagerumfang ausfällt, können diese Schlitze noch einigermassen wirtschaftlich mittels Funkenerosion hergestellt werden. Mit einem axialen Versatz im Stützring können die axial verlaufenden Brücken erzeugt werden, und die Schlitze sind dann durch normale Dreh- und Fräsoperationen, die sich im Bereich der Schlitze durchdringen, kostengünstig herstellbar. Der Lagerring, welcher das Lagermaterial beherbergt, kann unterschiedlich ausgeführt sein. Das Lagermaterial beispielsweise Hartstoff, Keramik, oder Siliziumcarbid kann eingeschrumpft sein. Das Lagermaterial kann aber auch als verschleissfeste Schicht, beispielsweise im "plasma-spraying"-Verfahren aufgetragen sein. Der Lagerring wird mit einer vorbestimmten Vorspannung im Federring verankert. Zur Sicherheit kann zwischen Lagerring und Aussenteil eine Drehsicherung und eine axiale Sicherung angebracht werden. Zur Vereinfachung der Montage kann der Mantel des Lagerrings als Kegelfläche ausgebildet werden und können die Stützflächen am Federring als entsprechende Gegenflächen ausgebildet werden, um die Vorspannung der Verbindung durch axiales Einpressen entlang den konischen Flächen zu erzeugen. Die Sicherung gegen Verdrehen des Lagerrings kann mit einem separaten Flansch auch als axiale Sicherung vom Konussitz verwendet werden. Wenn das Aussenteil als Einbauflansch konzipiert wird, der Standardabmessungen zum Gehäuse aufweist, dann sind baugleiche Lager mit unterschiedlichen Steifigkeiten für die Aufhängung der Lagerschale herstellbar und einbaubar. Als Material für das Aussenteil sind Metalle und Metall-Legierungen vorgesehen. Andere Werkstoffe sind denkbar, sofern sie ausreichende Festigkeit und Elastizität aufweisen.

Im folgenden wird die Erfindung anhand von Ausführungsbeispielen beschrieben. Es zeigen:
- Fig. 1: Schematisch eine Draufsicht in axialer Richtung mit Teilschnitt durch ein radiales Gleitlager;
- Fig. 2: schematisch einen Längsschnitt durch das Lager von Fig. 1;
- Fig. 3: schematisch ein Lager analog zu Fig. 1, bei dem das Aussenteil erfindungsgemäß einen axialen Versatz aufweist, um die Schlitze zwischen Federring und Stützring spanabhebend zu erzeugen;
- Fig. 4: schematisch einen Längsschnitt durch das Lager von Fig. 3 und dessen Aufnahme in einem Gehäuse;
- Fig. 5: schematisch einen Ausschnitt aus einem Lager, bei dem eine Drehsicherung mit einem separaten Flansch erreicht wird;
- Fig. 6: schematisch einen Ausschnitt aus einem Lager, bei dem Lagerring und Stützflächen gemeinsame Konusflächen aufweisen;
- Fig. 7: schematisch einen Ausschnitt aus einem Lager mit einem Federring, der aufgeschnitten ist; und
- Fig. 8: schematisch ein Aussenteil, dessen Federring aus einer Vielzahl von einzelnen zur Radialen schräggestellten Federn besteht.

In den Figuren sind flüssigkeitsgeschmierte radiale Gleitlager gezeigt, deren Lagerbuchse 1 elastisch in einem Aussenteil 2 befestigt ist und mit einem Wellenteil 3 eine elastische Lagerung bildet, welche Wellenschrägstellungen begrenzt folgen kann. Dadurch, dass das Lagermaterial in einem Lagerring 7 verankert ist und dass das Aussenteil 2 einstückig zu einem Federring 4 und einem Stützring 5 ausgebildet ist, welcher federnde nach innen gerichtete Stützflächen 8 aufweist, an denen der Lagerring 7 anliegt, sind bei gleichen Aussenabmessungen elastische Lager für hohe und tiefe Temperaturen sowie für unterschiedlich korrosive Schmierflüssigkeiten möglich.

In den Figuren sind gleichwirkende Teile mit gleichen Hinweiszeichen versehen.

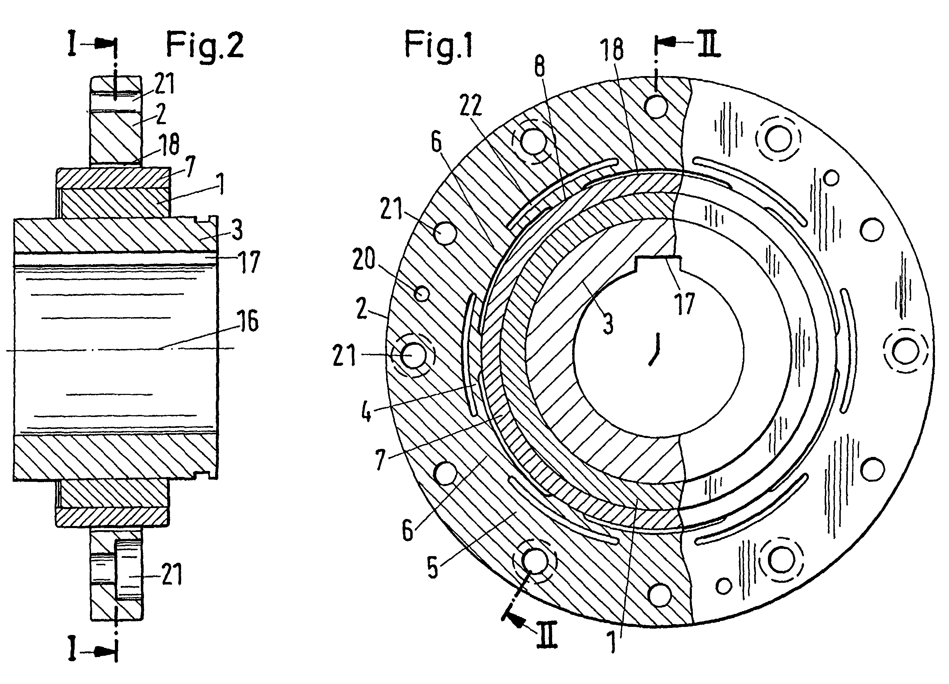

In Fig. 1 und 2 ist eine Lagerbuchse 1 in einem Lagerring 7 eingeschrumpft. In der Lagerbuchse 1 ist ein Wellenteil 3 drehbar gelagert, wobei ein Lagermoment über Feder und Nut 17 auf eine nicht gezeigte Welle übertragbar ist. Das Aussenteil 2 ist ringförmig als Stützring 5 ausgeführt, in dem Bohrungen 21 und Gewinde 20 für die Montage in einem Gehäuse angebracht sind. Nach innen schliesst an den Stützring 5 ein Federring 4 an, der über Schlitze 22 vom Stützring 5 getrennt ist und der über Brücken 6 zwischen den Schlitzen mit dem Stützring verbunden ist. Schlitze 22 und Brücken 6 sind gleichmässig über den Umfang verteilt, wobei wegen der räumlich unterschiedlichen Angriffsrichtungen der Lagerkräfte jeweils zwischen drei bis neun Schlitze 22 und Brücken 6 vorgesehen sind. Der Federring 4 besitzt gegen innen Stützflächen 8, die jeweils in der Mitte des Winkelbereiches eines dahinter angeordneten Schlitzes 22 liegen, während im Winkelbereich zwischen den Stützflächen 8 Aussparungen 18 vorgesehen sind. Ein eingepresster Lagerring 7 liegt damit nur an den Stützflächen 8 auf, die sich beim Einpressen elastisch in Richtung des dahinterliegenden Schlitzes 22 bewegen. Die radiale Steifigkeit an einer Stützfläche ergibt sich aus der Dimensionierung des Ringteils vom Federring 4. Dadurch, dass die axiale Abmessung von Stützflächen und Federring erheblich geringer als die vom Lagerring 7 ist, können neben thermischen Dehnungsunterschieden der verschiedenen Werkstoffe auch Schrägstellungen der Welle kompensiert werden, da bei schmalen Federringen der eigentliche Ringteil leichter schrägstellbar ist. Auf diese Weise ist es möglich, den Lagerring 7 über die im Federring 4 erzeugten Zug- und Biegekräfte relativ hart einzuspannen und trotzdem Schrägstellungen der Welle zuzulassen. Die in den Lagerring 7 eingeschrumpfte Lagerbuchse 1 kann aus Siliziumcarbid, Metalloxid oder Sinterwerkstoffen bestehen.

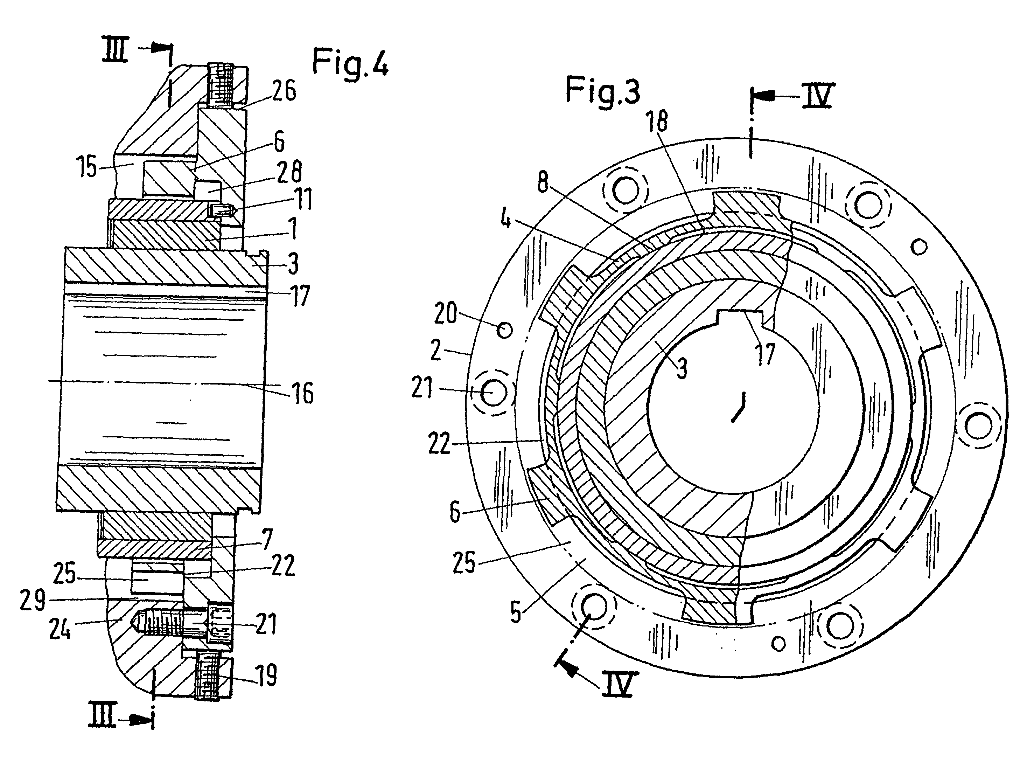

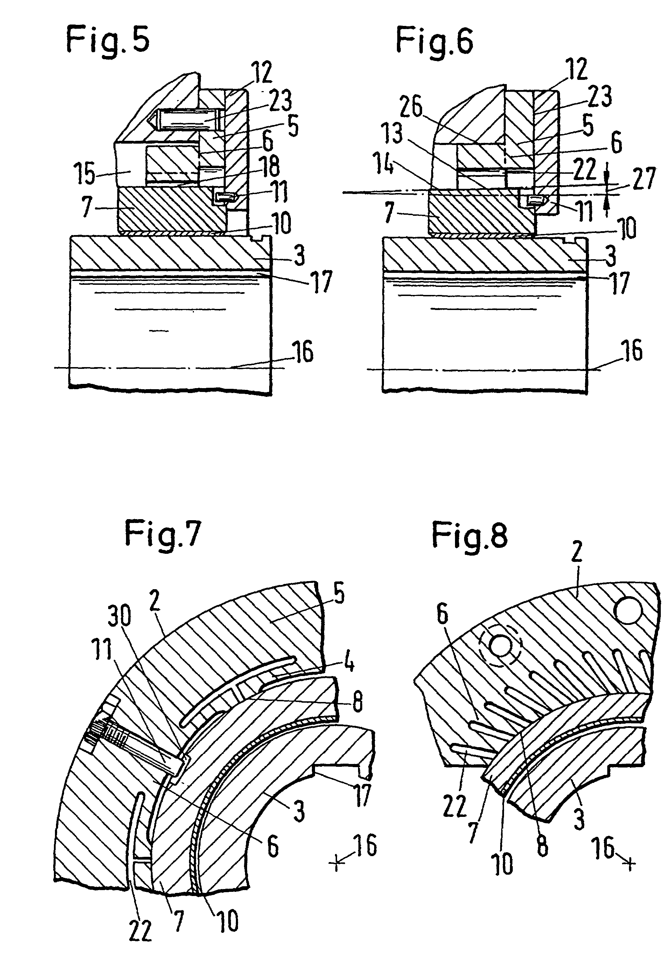

In den Figuren 3 und 4 sind Wellenteil 3, Lagerbuchse 1 und Stützring 7 gleich wie im vorangehenden Beispiel gestaltet. Lediglich der Lagerring 7 greift in eine Drehsicherung 11 gegenüber dem Stützring 5 ein. Die Drehsicherung 11 muss zulässige Wellenverlagerungen gestatten. Stützring 5 und Federring 4 sind axial zueinander versetzt. Am Federring 4 sind Brücken 6 und Schlitze 22 gleichmässig über den Umfang verteilt. Die Brückenteile 6 schliessen radial nach aussen an den Federring 4 an und gehen wegen dem Versatz vom eigentlichen Stützring 5 in axialer Richtung in den Stützring über. Herstelltechnisch entstehen die Brücken 6 durch Ausfräsen von Taschen 25 und die Schlitze 22 durch zusätzliches Überlappen mit der Kontur von einem Einstich 28 auf der Gegenseite. Zwischen den Brücken 6, die in das Gehäuse hineinstehen, und der Gehäusebohrung 15 besteht ein Radialspiel 29, welches mittels vier um 90° versetzten Zentrierschrauben 19 ein radiales Ausrichten von Lagerbuchse 1 und Stützring 5 erlaubt. Der Stützring 5 wird nach dem Ausrichten mit Schrauben 21 an einer Gehäusewand 24 befestigt. In Fig. 5 ist als Drehsicherung 11 ein eingepresster Stift mit einem separaten Haltering am Stützring 5 befestigt, während der Stützring 5 nach dem Zentrieren mit dem Gehäuse verbohrt und über Stifte 23 verstiftet wurde. In Fig. 6 sind die Stützflächen 8 und die Mantelfläche 13 vom Lagerring 7 nicht als Teilflächen eines gleichen Zylinders sondern als Teilflächen eines gleichen Kegels 14 ausgeführt, dessen halber Konuswinkel 27 weniger als 5° beträgt. Mit einer solchen Massnahme lässt sich der Lagerring 7, ohne die sonst notwendigen grossen Temperaturunterschiede im Federring 4 einpressen. Der separate Flansch 12 mit der Drehsicherung 11 dient gleichzeitig als Sicherung in axialer Richtung. Das Lagermaterial ist in diesen Beispielen nur als dünne Schicht 10 auf der Lagerbuchse 1 aufgetragen, welche direkt vom Federring 4 zentriert wird.

Eine weitere Möglichkeit für eine Drehsicherung ist in Fig. 7 gezeigt. Die Drehsicherung 11 besteht aus einem oder mehreren Schraubbolzen, die jeweils im Bereich einer Brücke 6 radial in eine Aussparung 30 wie Nut oder Sackloch am Lagerring hineinragen. In diesem Beispiel ist eine weitere Möglichkeit gezeigt, die Einspannung vom Lagerring 7 weicher zu machen. Die Stützflächen 8 sind hier radial geschlitzt, sodass aus dem Ringteil 4 zwei blattförmige Biegefedern entstehen und die Zugkräfte beim Einpressen des Lagerrings 7 wegfallen. Diese Überlegung lässt sich weiterführen zu einem Beispiel gemäss Fig. 8, bei dem diese Biegefedern und die Schlitze in einer Schrägstellung zur Radialen in grosser Anzahl am inneren Durchmesser des Aussenteils 2 wiederholt sind. Es entsteht eine Vielzahl von Stützflächen 8 mit jeweils einer durch Sägeschnitte 22 erzeugten Biegefeder. Je stärker die Neigung dieser Biegefedern von der Radialen weg zur Tangentialen an den Lagerring 7 ausfällt, desto eher können die Stützflächen 8 Schrägstellungen der Wellenachse 16 folgen.

## Patentansprüche

1. Flüssigkeitsgeschmiertes radiales Gleitlager mit einer Lagerbuchse (1) aus verschleissfestem Lagermaterial, die elastisch in einem Aussenteil (2) befestigt ist, und die mit einem Wellenteil (3) eine elastische Lagerung bildet, welche thermischen Wärmeausdehnungen und Wellenschrägstellungen begrenzt folgen kann, wobei das Lagermaterial in einem Lagerring (7) befestigt ist, **dadurch gekennzeichnet, dass** das Aussenteil (2) einteilig zu einem Federring (4) und einem Stützring (5) ausgebildet ist, wobei sich der Federring (4) mit über seinen Umfang verteilten Brücken (6) am Stützring (5) abstützt und seinerseits federnde nach innen gerichtete Stützflächen (8) aufweist, an denen der Lagerring (7) unter Vorspannung anliegt, und wobei die Brücken (6) den Federring (4) und den hierzu axial versetzten Stützring (5) in axialer Richtung miteinander verbinden.

2. Gleitlager nach Anspruch 1, **dadurch gekennzeichnet, dass** der Federring (4) ein durchgehend geschlossener Ring ist.

3. Gleitlager nach einem der Ansprüche 1 oder 2, **dadurch gekennzeichnet, dass** das Lagermaterial aus Hartstoff- oder Keramikteilen (9) besteht, welche in den Lagerring (7) eingeschrumpft sind, um eine Druckspannung zu erzeugen.

4. Gleitlager nach einem der Ansprüche 1 bis 3, **dadurch gekennzeichnet, dass** das Lagermaterial als verschleissfeste Schicht (10) im Lagerring (7) aufgebracht ist.

5. Gleitlager nach einem der Ansprüche 1 bis 4, **dadurch gekennzeichnet, dass** zwischen Aussenteil (2) und Lagerring (7) eine Drehsicherung (11) angebracht ist.

6. Gleitlager nach einem der Ansprüche 1 bis 5, **dadurch gekennzeichnet, dass** ein separater Haltering (12) den Lagerring (7) axial sichert.

7. Gleitlager nach Anspruch 6, **dadurch gekennzeichnet, dass** die Stützflächen (8) und die Mantelfläche (13) vom Lagerring (7) eine gemeinsame Kegelmantelfläche (14) aufweisen, um mit dem Eintauchen des Lagerringes (7) eine Vorspannung zwischen Lagerring und Stützflächen herzustellen.

8. Gleitlager nach einem der Ansprüche 1 bis 6, **dadurch gekennzeichnet, dass** das Aussenteil (2) als Einbauflansch konzipiert ist, der in Gehäusebohrungen (15) befestigbar ist.

9. Gleitlager nach Anspruch 8, **dadurch gekennzeichnet, dass** der Stützring (5) mit Radialspiel (29) in die Gehäusebohrung (15) einfahrbar ist, und dass dessen exakte Radialstellung durch Zentrierschrauben (19) einstellbar ist, bevor er definitiv am Gehäuse (24) befestigt wird.

10. Pumpe für Förderflüssigkeiten mit einem Lager nach einem der Ansprüche 1 bis 9, welches durch die Förderflüssigkeit geschmiert ist.

## Claims

1. Liquid lubricated radial sliding bearing including a bearing sleeve (1) of wear resistant bearing material which is elastically fastened in an outer part (2) and which, with a shaft part (3), forms an elastic support which can follow thermal expansions and inclined positions of the shaft to a limited extent, wherein the bearing material is fixed in a bearing ring (7), **characterised in that** the outer part (2) is formed in a single part as a resilient ring (4) and a support ring (5), with the resilient ring (4) being supported at the support ring (5) by bridges (6) which are distributed over the periphery of the resilient ring and in turn having resilient support surfaces (8) which are directed inwardly and contacted by the bearing ring (7) under prestress, with the bridges (6) connecting together in the axial direction the resilient ring (4) and the support ring (5) which is axially offset to it.

2. Sliding bearing in accordance with claim 1 **characterised in that** the resilient ring (4) is a continuous closed ring.

3. Sliding bearing in accordance with one of the claims 1 or 2 **characterised in that** the bearing material consists of hard material parts or ceramic parts (9) which are shrunk into the bearing ring (7) in order to produce a compressive stress.

4. Sliding bearing in accordance with any one of the claims 1 to 3 **characterised in that** the bearing material is applied as a wear resistant layer (10) in the bearing ring (7).

5. Sliding bearing in accordance with one of the claims 1 to 4 **characterised in that** a rotational security (11) is provided between the outer part (2) and the bearing ring (7).

6. Sliding bearing in accordance with one of the claims 1 to 5 **characterised in that** a separate holder ring (12) secures the bearing ring (7) axially.

7. Sliding bearing in accordance with claim 6 **characterised in that** the support surfaces (8) and the jacket surface (13) of the bearing ring (7) have a common conical jacket surface (14) in order to produce a prestress between the bearing ring and the support surfaces on entry of the bearing ring (7).

8. Sliding bearing in accordance with one of the claims 1 to 6 **characterised in that** the outer part (2) is designed as an installation flange which can be fastened in housing bores (15).

9. Sliding bearing in accordance with claim 8 **characterised in that** the support ring (5) can be moved into the housing bore (15) with a radial clearance (29); and **in that** its exact radial position can be set by centering screws (19) before it is definitively fastened to the housing (24).

10. Pump for forwarded liquids including a bearing in accordance with one of the claims 1 to 9 which is lubricated by the forwarded liquid.

## Revendications

1. Palier radial lisse lubrifié par un fluide, avec un coussinet (1) en un matériau de palier résistant à l'usure, qui est fixé élastiquement dans une partie extérieure (2), et qui forme avec une partie d'arbre (3) un logement élastique apte à suivre dans des limites des dilatations thermiques et des positions inclinées de l'arbre, où le matériau de palier est fixé dans une bague de palier (7), **caractérisé en ce que** la partie extérieure (2) est réalisée en une pièce avec un coussinet élastique (4) et une bague de support (5), où le coussinet élastique (4) s'appuie avec des ponts (6) répartis sur son pourtour sur la bague de support (5) et présente lui-même des faces d'appui (8) dirigées élastiquement vers l'intérieur, auxquelles s'applique la bague de palier (7) sous précontrainte, et où les ponts (6) relient le coussinet élastique (4) et la bague de support (5) décalée axialement relativement à celui-ci dans la direction axiale.

2. Palier lisse selon la revendication 1, **caractérisé en ce que** le coussinet élastique (4) est une bague fermée tout autour.

3. Palier lisse selon l'une des revendications 1 ou 2, **caractérisé en ce que** le matériau de palier est constitué de parties en matériau dur ou en céramique (9) qui sont frettées dans la bague de palier (7) pour produire une contrainte de compression.

4. Palier lisse selon l'une des revendications 1 à 3, **caractérisé en ce que** le matériau de palier est appliqué comme couche (10) résistant à l'usure dans la bague de palier (7).

5. Palier lisse selon l'une des revendications 1 à 4, **caractérisé en ce qu'**il est disposé entre la partie extérieure (2) et la bague de palier (7) une sécurité (11) à l'encontre d'une rotation.

6. Palier lisse selon l'une des revendications 1 à 5, **caractérisé en ce qu'**une bague de retenue séparée (12) assure axialement la bague de palier (7).

7. Palier lisse selon la revendication 6, **caractérisé en ce que** les faces d'appui (8) et la face d'enveloppe (13) de la bague de palier (7) présentent une face d'enveloppe conique commune (14) pour produire avec la plongée de la bague de palier (7) une précontrainte entre la bague de palier et les faces d'appui.

8. Palier lisse selon l'une des revendications 1 à 6, **caractérisé en ce que** la partie extérieure (2) est conçue comme bride de montage qui peut être fixée dans des alésages de boîtier (15).

9. Palier lisse selon la revendication 8, **caractérisé en ce que** la bague de support (5) peut être insérée avec un jeu radial (29) dans l'alésage de boîtier (15), et **en ce que** sa position radiale exacte est réglable par des boulons de centrage (19) avant qu'elle ne soit fixée définitivement au boîtier (24).

10. Pompe pour des liquides de convoyage avec un palier selon l'une des revendications 1 à 9, qui est lubrifiée par le liquide de convoyage.
